# EUROPEAN PATENT SPECIFICATION

(11) **EP 2 857 709 B1**
(45) Date of publication and mention of the grant of the patent: **28.03.2018**
(21) Application number: 13382386.4
(22) Date of filing: 03.10.2013
(51) Int. Cl.: F16D 65/18

(54) **Brake calliper**
Bremssattel
Étrier de frein

(43) Date of publication of application: 08.04.2015
(73) Proprietor: J.Juan S.A., 08850 Gava Barcelona (ES)
(72) Inventor: García Blanco, Joaquín, 08860 CASTELLDEFELS (ES)
(74) Representative: Carvajal y Urquijo, Isabel

(56) References cited:
- WO-A1-2010/067313
- US-A- 3 724 605
- US-A- 5 219 047
- US-A1- 2001 030 088

## Description

### Field of the invention

The present invention refers to a parking brake caliper for vehicles in general and particularly for motorcycles, having been designed to avoid becoming stuck or blocked, these being problems which usually occur in said pieces as a result of friction on their main components. Such a brake is for instance known from US-A-2001/0030088.

### Background of the invention

Parking brake calipers constitute a security device designed to stop a vehicle from moving, mainly when it is parked. They usually prevent the vehicle from travelling in a longitudinal direction or, as is the case with some motorcycles, from travelling in a crosswise direction, in order to prevent swaying, which causes them to turn over. These devices have become a basic element in large, heavy motorcycles and their use is generally obligatory. They serve to immobilize the wheels to prevent them from accidentally turning as a result of the vehicle's inertia whilst it is parked. Their shortfall is that they may cause the motorcycle to travel in an uncontrolled manner, this movement being capable of lifting the motorcycle's bike lift or kick stand, thereby causing the motorcycle to fall over.

Current parking brake calipers are usually formed by a brake actuator with a built in actuation lever, which can be either manual or automatic (for example, driven by an electric motor), configured to transmit a rotational movement onto a drive shaft, which in turn has a drive head, configured to transmit a push force. A displacement mechanism makes it possible to transform said rotational movement into a linear movement of the drive shaft, which is capable of generating the push force. A piston housed inside a framework is displaced along the length of a cylinder defined in the same, owing to the linear movement of the drive shaft. The displacement of said piston in turn gives rise to pressure being applied on a set of brake pads, configured to apply friction to a brake disc, usually arranged in one or more of the vehicle's wheels.

It must be pointed out that in order for these calipers to work, torsion must always be applied to the drive shaft, caused by the rotational movement of the actuation lever. Given that the drive head of said shaft is immobilized and in direct contact with the piston, this gives rise to gradual wear between other fixed and mobile parts of the caliper over time, thus resulting in deviation in the linear movement of said drive shaft. In turn, this increases friction, mainly between the piston and the drive head (owing to the considerable surface contact between the two), which finally causes the drive shaft to become stuck or blocked. Said friction may become high enough to mean that the user is unable to release the shaft, either manually or automatically. This is largely inconvenient.

The present invention resolves the above described problem, using a brake caliper whose configuration makes it possible to transmit the push force of the drive head to the piston via a point contact, in order to reduce friction between the drive head and the piston. Over time, wear caused by friction is concentrated in the area where this point-contact is made. This minimizes deviation of the drive shaft, in turn reducing the wear produced between other fixed and mobile parts of the caliper and by proxy, the friction caused by said deviation. This makes it possible to successfully avoid sticking in many cases and in other cases, extends the operational cycle notably before the same begins to appear.

### Description of the invention

The present invention refers to a parking brake caliper, comprising:
- a brake actuator, with:
   - a drive shaft, with a drive head configured to transmit a push force;
   - an actuation lever, configured to transmit a rotational movement onto the drive shaft and;
   - a displacement mechanism, configured to transform the rotational movement into a linear movement of the drive shaft, said linear movement being capable of generating the push force;
- a framework, inside which a piston is housed, this piston being configured to travel along the length of a cylinder defined in the same, owing to the linear movement of the drive shaft and;
- a set of brake pads, configured to press a vehicle's brake disc, by means of the piston being moved forwards by the push force.

The push force is transmitted from the drive head to the piston via a point contact, in order to reduce the friction between the drive head and the piston. Said point contact is caused by a flat surfaced body coming into contact with a spherical, semi-spherical or oval surfaced body. In turn, said body may be formed and/or mechanized on the same drive head or on the piston itself, forming an indivisible unit as regards the same or, it may form an independent intermediate body arranged between both. Said body corresponds to a thrust ball arranged between the piston and the drive head, said ball being configured to transmit the push force of the drive head to the piston, to thereby cause it to move forwards. This gives rise to indirect transmission, i.e. via the thrust ball, between the drive head and the piston.

The thrust ball is arranged with freedom of rotation between the piston and the drive head, remaining joined to one or another by means of fastening means, which prevent said ball from being able to come out of its housing.

The thrust ball may also be arranged freely in the housing set up for such ends, in such a way that, in addition to having freedom of rotation, it has a certain degree of translation movement on one or all of the X, Y, Z coordinate axes, even with the fastening means needed to prevent it from coming out of its housing. According to a particular embodiment of the present invention, the thrust ball is loose within the housing, without fastening means. Therefore, the thrust ball has a certain degree of freedom of movement, owing to the fact that there is a certain amount of space or clearance in said housing. Similarly, there is also a minimum thrust ball clearance or space, relative to the drive head and to the piston. This also facilitates the assembly of these components as the caliper is being manufactured.

When the brake is operated, the thrust ball comes into contact with the drive head and, given its mobility, corrects its position, adapting to a possible deviation of the drive shaft. The thrust ball therefore has a point contact with the drive head. For this reason, in addition to the spherical or substantially spherical shape of the ball, the drive had comprises a flat surfaced drive end, which is perpendicular to the drive shaft. Friction wear caused by the repeat operation of the caliper is concentrated on said flat surface, always ensuring a point contact with the thrust ball. This means that the resulting push force vector transmitted onto the piston is kept in line with the resulting push force vector transmitted by the drive head onto the ball.

Wear being concentrated on the flat surface helps to reduce and/or prevent wear in other components, such as the actuator or framework. This makes it possible to successfully minimize deviation of the drive shaft, as well as the sticking or blockage brought about by the same.

The displacement mechanism preferably comprises:
- a fixed shell joined to the framework, with an internal thread and;
- a mobile shell, with an external thread, threaded in the internal thread, axially crossed by the drive shaft, attached to the same and in turn, attached to the actuation lever via a rotation end, perpendicular to said lever.

The actuation lever may be operated in various ways, whether manual or automatic. The most common include using a brake cable, which in turn comprises an end connected to the lever itself and another end connected to a manual drive (for example a handle) or an automatic drive (for example an electric motor). When the brake is operated, the cable is tensed, thus causing the lever to rotate in one direction, which in turn causes the piston to move forwards, pressure thereby being applied to the brake disc. After braking, the cable is kept tensed. When the brake is released, a back drive (for example a mechanical energy accumulator of the spring variety) pushes the lever, causing it to rotate in the opposite direction, the brake disc thereby being freed.

The displacement mechanism also preferably comprises a flexible dust-guard cover, with a first end joined to the framework or to the fixed shell and a second end joined to the mobile shell. Of the various closure options, the displacement mechanism preferably comprises a closure nut, configured to join the actuation lever to the mobile shell.

As previously indicated, the thrust ball is arranged between the piston and the drive head, barely separated from said elements by the presence of a minimum clearance or space. Therefore, according to the present invention, or space. Therefore, an axial housing on an internal face of the the present invention, the piston comprises an axial housing on an internal face of the same, which has an opening, through which the thrust ball is introduced during the mounting thereof. Said axial housing is configured to house the thrust ball and enable its freedom of movement. The housing is formed by a cavity, the bottom of which is opposite to the opening. The cavity may be cylindrical or prismatic in form, whilst the bottom may be in the form of a pyramid, a cone or be flat, it being possible, in any case, for it to take on other geometrical shapes and/or combinations thereof.

The housing preferably comprises a fore-chamber in communication with the opening, said fore-chamber being configured to house the drive head. The fore-chamber comprises a recoil washer, configured to enable the piston to travel back along the length of the cylinder, by means of a recoil force generated by the linear movement of the drive shaft. In turn, the drive head comprises a recoil flywheel, configured to transmit the recoil force onto the recoil washer.

The set of brake pads preferably comprises an external friction plate and an internal friction plate, which are arranged in such a way that they are opposite to one another, a space being defined between them, which is designed to accommodate the brake disc. Said internal friction plate is configured to receive pressure caused by the piston moving forwards and to move against the external friction plate.

### Brief description of the drawings

Below is a brief description of a series of drawings, which serve to facilitate a better understanding of the present invention and are expressly related with one embodiment of said invention, presented as a non-limiting example thereof.
Figure 1 is a longitudinal section of the parking brake caliper, object of the present invention, represented as the brake is in operation and illustrating the piston moving forwards.
Figure 2 gives a detailed view of the piston, when the brake is operation.
Figure 3 is a longitudinal section of the parking brake caliper, object of the present invention, represented as the brake is being freed, illustrating the piston recoiling.

### Detailed description of the invention

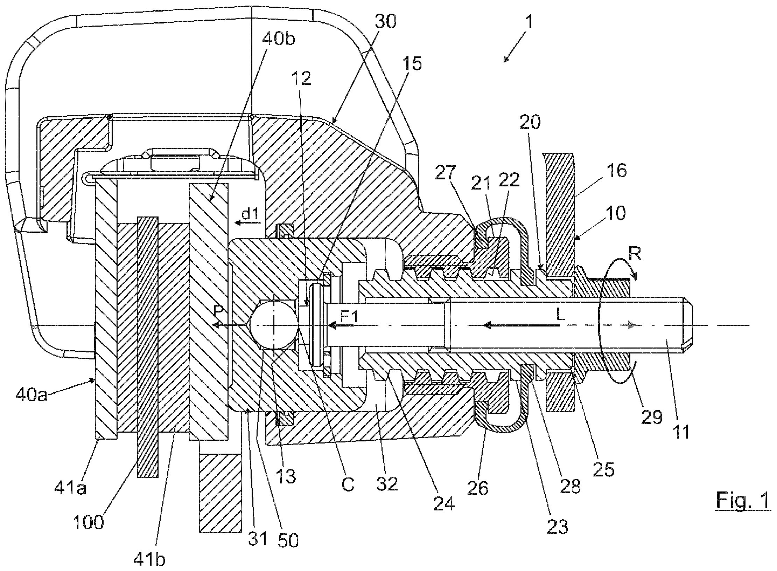

Figure 1 is a longitudinal section of the parking brake caliper (1), object of the present invention, represented as the brake is being operated. As can be seen, the caliper (1) comprises:
- a brake actuator (10), with:
   - a drive shaft (11) with a drive head (12) configured to transmit a push force (F1);
   - an actuation lever (16), configured to transmit a rotational movement (R) onto the drive shaft (11) and;
   - a displacement mechanism (20), configured to transform the rotational movement (R) into a linear movement (L) of the drive shaft (11), said linear movement (L) being capable of generating the push force (F1);
- a framework (30), inside which a piston (31) is housed, this piston being configured to move along the length of a cylinder (32) defined in the same, owing to the linear movement (L) of the drive shaft (11) and;
- a set of brake pads (40a, 40b), configured to apply pressure to a vehicle's brake disc (100), by means of the piston (31) moving forwards (d1) as a result of the push force (F1).

The caliper, object of the present invention, is characterized in that the push force (F1) is transmitted from the drive head (12) to the piston (31) via a point contact (C), in order to reduce the friction between the drive head (12) and the piston (31). According to the present example, said point contact (C) is materialized by means of a thrust ball (50) arranged between the piston (31) and the drive shaft (12), said ball (50) being configured to transmit the push force (F1) of the drive head (12) to the piston (31), thereby causing it to move forwards (d1). As a result, an indirect transmission occurs, i.e. via the thrust ball (50), between the drive head (12) and the piston (31).

As can be seen, the thrust ball (50) is spherical, with a point contact (C) with the drive head (12). Likewise, the drive head (12) comprises a flat surfaced drive end (13), which is perpendicular to the drive shaft (11). Friction wear caused by repeat operation of the caliper (1) is concentrated on said flat surface of the drive end (13), always ensuring a point contact with the thrust ball (50). This allows the vector resulting from the push force (F1) transmitted onto the piston (31) to be kept in line with the vector resulting from the push force (F1) transmitted by the drive head (12) on the ball (50).

Wear being concentrated on the flat surface of the drive end (13) helps to reduce and/or prevent wear in other components, such as the actuator (10) and, mainly in its displacement mechanism (20). This makes it possible to successfully minimize deviation of the drive shaft (11), as well as sticking or blockage brought about by the same.

According to the present preferred embodiment example, the displacement mechanism (20) comprises:
- a fixed shell (21) joined to the framework (30), with an internal thread (22) and;
- a mobile shell (23) with an external thread (24), threaded in the internal thread (22), axially crossed by the drive shaft (11), attached to the same and in turn, attached to the actuation lever (16) via a rotation end (25), perpendicular to said lever (16).

The displacement mechanism (20) also comprises a flexible dust-guard cover (26) with a first end (27) joined to the framework (30) and a second end (28) joined to the mobile shell (23). The fact that it is flexible allows the mobile shell (23) to move. In turn, the displacement mechanism (20) comprises a closure nut (29), configured to join the actuation lever (16) to the mobile shell (23).

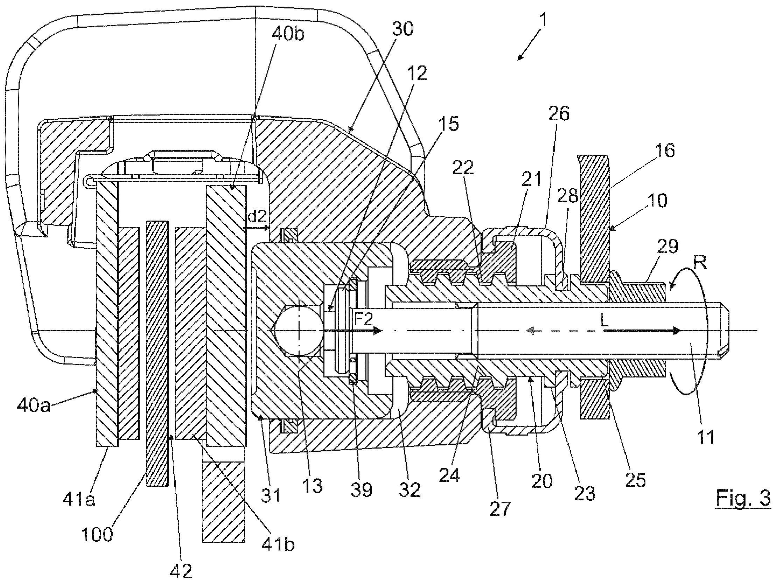

The set of brake pads (40a, 40b) comprises an external friction plate (41a) and an internal friction plate (41b), arranged in such a way that they are opposite to one another and a space (42), (figure 3) being defined between them, intended to accommodate the brake disc (100). Said internal friction plate (41b) is configured to receive pressure (P) generated by the piston (31) moving forwards (A) and to move against the external friction plate (41a).

The linear movement of the shaft (L) is represented by an arrow pointing in two directions. The direction corresponding to the drive shaft (11) moving forwards is highlighted in a continuous line.

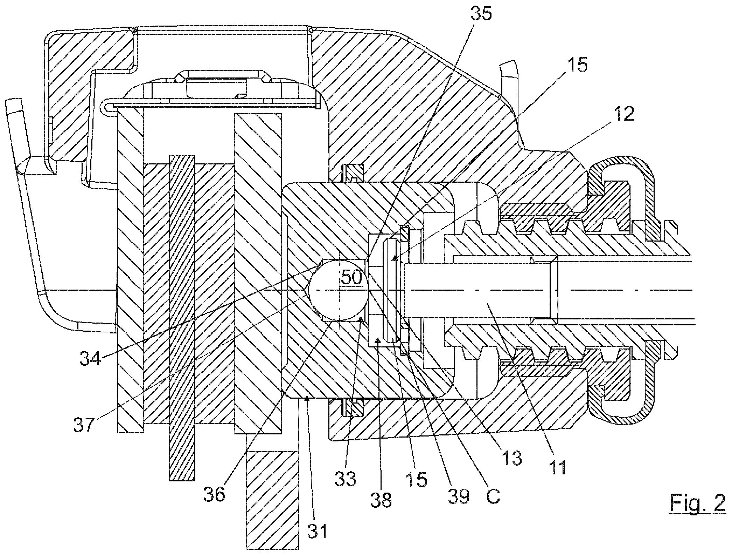

Figure 2 provides a detailed view of the piston (31) when the brake is in operation. As can be seen, the piston (31) comprises an axial housing (33) on an internal face (34) of the same, with an opening (35), through which the thrust ball (50) is introduced during the mounting thereof. Said axial housing (33) is configured to house the thrust ball (50) and enable its freedom of movement (before operating the brake). The housing (33) is formed by a cavity (36), the bottom (37) of which is opposite to the opening (35). According to the present preferred embodiment example, the cavity (36) is cylindrical in shape, whilst the bottom (37) may be cone shaped.

The housing (33) comprises a fore-chamber (38) in communication with the opening (35), where said fore-chamber (38) is configured to house the drive head (12). The fore-chamber (38) comprises a recoil washer (39).

Figure 3 is a longitudinal section of the parking brake caliper (1), object of the present invention, represented as the brake is being released. As can be seen, the recoil washer (39) is configured to allow the piston (31) to recoil (M2) along the length of the cylinder (32) by means of a recoil force (F2) generated by the linear movement (L) of the drive shaft (11). In turn, the drive head (12) comprises a recoil flywheel (15), which is configured to transmit the recoil force (F2) onto the recoil washer (39).

The linear movement of the shaft (L) is represented by an arrow pointing in two directions. The direction corresponding to the drive shaft (11) recoiling is highlighted in a continuous line.

## Claims

1. Parking brake caliper, comprising:
• a brake actuator (10), with:
- a drive shaft (11), with a drive head (12), configured to transmit a push force (F1);
- an actuation lever (16), configured to transmit a rotational movement (R) onto the drive shaft (11) and;
- a displacement mechanism (20), configured to transform the rotational movement (R) into a linear movement (L) of the drive shaft (11), said linear movement (L) being capable of generating the push force (F1);
• a framework (30), inside which a piston (31) is housed, configured to travel along the length of a cylinder (32) defined in the same, owing to the linear movement (L) of the drive shaft (11) ;
• a set of brake pads (40a, 40b), configured to apply pressure to a vehicle's brake disc (100), by means of the piston (31) travelling forwards (d1), caused by the push force (F1); and
• a thrust ball (50) arranged between the piston (31) and the drive head (12), said ball (50) being configured to transmit the push force (F1) from the drive head (12) to the piston (31) via a point contact (C);
said caliper (1) being **characterized in that** the piston (31) comprises an axial housing (33) on an internal face (34) of the same, which has an opening (35), where said axial housing (33) is configured to house the thrust ball (50) and enable its freedom of rotation.

2. Parking brake caliper according to claim 1, **characterized in that** the point contact (C) is produced by contact with a flat surface and a spherical, semi-spherical or oval shaped surface.

3. Parking brake caliper according to any of the claims 1 to 2, **characterized in that** the drive head (12) comprises a flat surfaced drive end (13), which is perpendicular to the drive shaft (11).

4. Parking brake caliper according to any of the claims 1 to 3, **characterized in that** the displacement mechanism (20) comprises:
• a fixed shell (21) joined to the framework (30), with an internal thread (22) and;
• a mobile shell (23) with an external thread (24), threaded in the internal thread (22), axially crossed by the drive shaft (11), attached to the same and joined, in turn, to the actuation lever (16) via a rotation end (25), which is perpendicular to said lever (16).

5. Parking brake caliper according to claim 4, **characterized in that** the displacement mechanism (20) comprises a flexible dust-guard cover (26) with a first end (27) joined to the framework (30) and a second end (28) joined to the mobile shell (23).

6. Parking brake caliper according to any of the claims 4 to 5, **characterized in that** the displacement mechanism (20) comprises a closure nut (29), configured to join the actuation lever (16) to the mobile shell (23).

7. Parking brake caliper according to any of the claims 1 to 6, **characterized in that** the housing (33) is formed by a cavity (36), the bottom (37) of which is located opposite to the opening (35).

8. Parking brake caliper according to claim 7, **characterized in that** the cavity (36) is cylindrical or prismatic in shape **and in that** the bottom (37) is a pyramid shape, cone shape or flat.

9. Parking brake caliper according to any of the claims 7 to 8, **characterized in that** the housing (33) comprises a fore-chamber (38) in communication with the opening (35), where said fore-chamber (38) is configured to house the drive head (12).

10. Parking brake caliper according to claim 9, **characterized in that** the fore-chamber (38) comprises a recoil washer (39), configured to allow the piston (31) to recoil (M2) along the length of the cylinder (32), as a result of a recoil force (F2) generated by the linear movement (L) of the drive shaft (11).

11. Parking brake caliper according to claim 10, **characterized in that** the drive head (12) comprises a recoil flywheel (15), which is configured to transmit the recoil force (F2) on the recoil washer (39).

12. Parking brake caliper according to any of the claims 1 to 11, **characterized in that** the set of brake pads (40a, 40b) comprises an external friction plate (41a) and an internal friction plate (41b), arranged in such a way that they are opposite one another and a space (42) being defined between them, intended to accommodate the brake disc (100).

13. Parking brake disc according to claim 12, **characterized in that** the internal friction plate (41b) is configured to receive pressure (P) caused by the piston (31) moving forwards (d1) and to move against the external friction plate (41a).

## Patentansprüche

1. Feststellbremssattel, umfassend:
• einen Bremsaktuator (10), mit:
- einer Antriebswelle (11), mit einem Antriebskopf (12), der zum Übertragen einer Druckkraft (F1) konfiguriert ist;
- einem Betätigungshebel (16), der zum Übertragen einer Drehbewegung (R) auf die Antriebswelle (11) konfiguriert ist, und;
- einem Verschiebermechanismus (20), der zum Umwandeln der Drehbewegung (R) in eine lineare Bewegung (L) der Antriebswelle (11) konfiguriert ist, wobei die lineare Bewegung (L) eine Druckkraft (F1) erzeugen kann;
• einem Rahmen (30), in dem ein Kolben (31) untergebracht ist, der zum Fahren entlang einer Länge eines darin definierten Zylinders (32) aufgrund der linearen Bewegung (L) der Antriebswelle (11) konfiguriert ist;
• einem Satz von Bremsklötzen (40a, 40b), der zum Anlegen eines Drucks auf eine Fahrzeugbremsscheibe (100) mittels des Kolbens (31) konfiguriert ist, die nach vorne (d1) fahren, was durch die Druckkraft (F1) bewirkt wird; und
• einer Axialkugel (50), die zwischen dem Kolben (31) und dem Antriebskopf (12) angeordnet ist, wobei die Kugel (50) konfiguriert ist, um die Druckkraft (F1) von dem Antriebskopf (12) zu dem Kolben (31) über einen Punktkontakt (C) zu übertragen;
wobei der Bremssattel (1) **dadurch gekennzeichnet ist, dass** der Kolben (31) ein axiales Gehäuse (33) an einer Innenfläche (34) davon aufweist, das eine Öffnung (35) aufweist, wobei das axiale Gehäuse (33) konfiguriert ist, um die Axialkugel (50) aufzunehmen und ihre Drehfreiheit zu ermöglichen.

2. Feststellbremssattel nach Anspruch 1, **dadurch gekennzeichnet, dass** der Punktkontakt (C) durch Kontakt mit der flachen Oberfläche und einer kugelförmigen, halbkugelförmigen oder ovalen Oberfläche hergestellt wird.

3. Feststellbremssattel nach einem der Ansprüche 1 bis 2, **dadurch gekennzeichnet, dass** der Antriebskopf (12) ein flachflächiges Antriebsende (13) umfasst, das senkrecht zur Antriebswelle (11) ist.

4. Feststellbremssattel nach einem der Ansprüche 1 bis 3, **dadurch gekennzeichnet, dass** der Verschiebermechanismus (20) umfasst:
• eine feste Schale (21) die mit dem Rahmen (30) zusammengefügt ist, mit einem Innengewinde (22) und;
• eine bewegliche Schale (23) mit einem Außengewinde (24), die in das Innengewinde (22) geschraubt wird, axial von der Antriebswelle (11) durchlaufen wird und daran befestigt ist, und andererseits mit dem Betätigungshebel (16) über ein Drehende (25), das senkrecht zum Hebel (16) verläuft, zusammengefügt ist.

5. Feststellbremssattel nach Anspruch 4, **dadurch gekennzeichnet, dass** der Verschiebermechanismus (20) eine flexible Staubfängerabdeckung (26) mit einem ersten Ende (27), das mit dem Rahmen (30) zusammengefügt ist, und einem zweiten Ende (28), das mit der mobilen Schale (23) zusammengefügt ist, umfasst.

6. Feststellbremssattel nach einem der Ansprüche 4 bis 5, **dadurch gekennzeichnet, dass** der Verschiebermechanismus (20) eine Verschlussmutter (29) umfasst, die konfiguriert ist, um den Betätigungshebel (16) mit der mobilen Schale (23) zusammenzufügen.

7. Feststellbremssattel nach einem der Ansprüche 1 bis 6, **dadurch gekennzeichnet, dass** das Gehäuse (33) durch einen Hohlraum (36) gebildet ist, dessen Unterseite (37) gegenüber der Öffnung (35) angeordnet ist.

8. Feststellbremssattel nach Anspruch 7, **dadurch gekennzeichnet, dass** der Hohlraum (36) zylinderförmig oder prismaförmig ist und dadurch, dass die Unterseite (37) pyramidenförmig, kegelförmig oder flach ist.

9. Feststellbremssattel nach einem der Ansprüche 7 bis 8, **dadurch gekennzeichnet, dass** das Gehäuse (33) eine Vorderkammer (38) in Kommunikation mit der Öffnung (35) umfasst, wobei die Vorderkammer (38) zum Unterbringen des Antriebskopfes (12) konfiguriert ist.

10. Feststellbremssattel nach Anspruch 9, **dadurch gekennzeichnet, dass** die Vorderkammer (38) eine Rückstoß-Unterlegscheibe (39) umfasst, die konfiguriert ist, damit der Kolben (31) entlang (M2) der Länge des Zylinders (32) rückstoßen kann als ein Ergebnis einer Rückstoßkraft (F2), die durch die lineare Bewegung (L) der Antriebswelle (11) erzeugt wird.

11. Feststellbremssattel nach Anspruch 10, **dadurch gekennzeichnet, dass** der Antriebskopf (12) ein Rückstoß-Schwungrad (15) umfasst, das zum Übertragen der Rückstoßkraft (F2) auf die Rückstoß-Unterlegscheibe (39) konfiguriert ist.

12. Feststellbremssattel nach einem der Ansprüche 1 bis 11, **dadurch gekennzeichnet, dass** der Satz von Bremsklötzen (40a, 40b) eine externe Reibscheibe (41a) und eine interne Reibscheibe (41b) umfasst, die derart angeordnet sind, dass sie einander gegenüberliegen und ein Raum (42) dazwischen definiert wird, der die Bremsscheibe (100) unterbringen soll.

13. Feststellbremssattel nach Anspruch 12, **dadurch gekennzeichnet, dass** die interne Reibscheibe (41b) zum Aufnehmen von Druck (P), der durch dadurch bewirkt wird, dass sich der Kolben (31) nach vorne bewegt (d1), und zum Bewegen gegen die externe Reibscheibe (41a) konfiguriert ist.

## Revendications

1. Étrier de frein de stationnement, comprenant :
• un frein moteur (10), avec :
- un arbre de transmission (11), avec une tête de transmission (12), configuré pour transmettre une force de poussée (F1) ;
- un levier d'actionnement (16), configuré pour transmettre un mouvement rotationnel (R) sur l'arbre de transmission (11) et ;
- un mécanisme de déplacement (20), configuré pour transformer le mouvement rotationnel (R) en un mouvement linéaire (L) de l'arbre de transmission (11), ledit mouvement linéaire (L) étant capable de générer la force de poussée (F1) ;
• une structure (30), dans laquelle un piston (31) est logé, configurée pour se déplacer le long d'un cylindre (32) défini dans cette dernière, appartenant au mouvement linéaire (L) de l'arbre de transmission (11) ;
• un ensemble de plaquettes de frein (40a, 40b), configuré pour appliquer une pression à un disque de frein du véhicule (100) au moyen du piston (31) se déplaçant vers l'avant (d1), engendrée par la force de poussée (F1) ; et
• une butée à bille (50) disposée entre le piston (31) et la tête de transmission (12), ladite butée (50) étant configurée pour transmettre la force de poussée (F1) de la tête de transmission (12) au piston (31) moyennant un point de contact (C) ;
ledit étrier (1) étant **caractérisé en ce que** le piston (31) comprend un logement axial (33) sur une face interne (34) de ce dernier, qui a une ouverture (35), où ledit logement axial (33) est configuré pour loger la butée à bille (50) et permet sa libération de rotation.

2. Étrier de frein de stationnement selon la revendication 1, **caractérisé en ce que** le point de contact (C) est produit par contact avec une surface plate et une surface sphérique, semi-sphérique ou en forme ovale.

3. Étrier de frein de stationnement selon l'une quelconque des revendications 1 à 2, **caractérisé en ce que** la tête de transmission (12) comprend une extrémité d'entraînement avec une surface plate (13), qui est perpendiculaire à l'arbre de transmission (11).

4. Étrier de frein de stationnement selon l'une quelconque des revendications 1 à 3, **caractérisé en ce que** le mécanisme de déplacement (20) comprend :
• une enveloppe fixe (21) raccordée à la structure (30), avec un filetage interne (22) et ;
• une enveloppe mobile (23) avec un filetage externe (24), filetée dans le filetage interne (22), axialement traversée par l'arbre de transmission (11), reliée à ce dernier et raccordée, par conséquent, au levier d'actionnement (16) à travers une extrémité de rotation (25), qui est perpendiculaire audit levier (16).

5. Étrier de frein de stationnement selon la revendication 4, **caractérisé en ce que** le mécanisme de déplacement (20) comprend un capot anti-poussière (26) avec une première extrémité (27) raccordée à la structure (30) et une deuxième extrémité (28) raccordée à l'enveloppe mobile (23).

6. Étrier de frein de stationnement selon l'une quelconque des revendications 4 à 5, **caractérisé en ce que** le mécanisme de déplacement (20) comprend un écrou de fermeture (29), configuré pour raccorder le levier d'actionnement (16) à l'enveloppe mobile (23).

7. Étrier de frein de stationnement selon l'une quelconque des revendications 1 à 6, **caractérisé en ce que** le logement (33) est formé par une cavité (36), dont la partie inférieure (37) est située à l'opposé de l'ouverture (35).

8. Étrier de frein de stationnement selon la revendication 7, **caractérisé en ce que** la cavité (36) est cylindrique ou prismatique en forme et **en ce que** la partie inférieure (37) est une forme pyramidale, conique ou plate.

9. Étrier de frein de stationnement selon l'une quelconque des revendications 7 à 8, **caractérisé en ce que** le logement (33) comprend une chambre avant (38) en communication avec l'ouverture (35), où ladite chambre avant (38) est configurée pour loger la tête de transmission (12).

10. Étrier de frein de stationnement selon la revendication 9, **caractérisé en ce que** la chambre avant (38) comprend une rondelle de rappel (39), configurée pour permettre au piston (31) de revenir (M2) le long du cylindre (32), étant le résultat de la force de rappel (F2) générée par le mouvement linéaire (L) sur l'arbre de transmission (11).

11. Étrier de frein de stationnement selon la revendication 10, **caractérisé en ce que** la tête d'actionnement (12) comprend un volant d'inertie de rappel (15), qui est configuré pour transmettre la force de rappel (F2) sur la rondelle de rappel (39).

12. Étrier de frein de stationnement selon l'une quelconque des revendications 1 à 11, **caractérisé en ce que** l'ensemble de plaquettes de frein (40a, 40b) comprend une plaque de friction externe (41a), et une plaque de friction interne (41b), disposées de sorte qu'elles soient en regard l'une de l'autre et un espace (42) étant défini entre elles, prévu pour accommoder le disque de frein (100).

13. Étrier de frein de stationnement selon la revendication 12, **caractérisé en ce que** la plaque de friction interne (41b) est configurée pour recevoir une pression (P) engendrée par le piston (31) se déplaçant vers l'avant (d1) et pour se déplacer contre la plaque de friction externe (41a).
